(19) Europäisches Patentamt
European Patent Office
Office européen des brevets

(11) **EP 4 602 911 A1**

(12) **EUROPÄISCHE PATENTANMELDUNG**

(43) Veröffentlichungstag:
**20.08.2025 Patentblatt 2025/34**

(21) Anmeldenummer: **24218682.3**

(22) Anmeldetag: **10.12.2024**

(51) Internationale Patentklassifikation (IPC):
**A01F 25/16** (2006.01) **A01F 25/18** (2006.01)
**A01B 79/00** (2006.01) **A01D 41/127** (2006.01)
**E01C 19/28** (2006.01)

(52) Gemeinsame Patentklassifikation (CPC):
**A01F 25/186; A01F 25/166;** A01B 79/005;
A01D 41/127

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **31.01.2024 DE 102024102732**

(71) Anmelder: **Deere & Company**
**Moline, IL 61265 (US)**

(72) Erfinder:
• **Flemming, Axel**
**Mannheim (DE)**
• **Brocke, Stefan**
**Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(54) **VERFAHREN UND SYSTEM ZUR ERMITTLUNG EINES VERDICHTUNGSZU-STANDS EINES ERNTEGUTES**

(57)     Die Erfindung betrifft ein Verfahren zur Ermittlung eines Verdichtungszustands (stat_D) eines gelagerten Erntegutes (12), dessen Oberfläche (14, 52) von einem Nutzfahrzeug (16) zur Verdichtung überfahren wird, wobei der Verdichtungszustand (stat_D) in Abhängigkeit von mindestens einem während des Überfahrens wirksamen Fahrzeug-Parameter (para_f) ermittelt wird.

Der mindestens eine Fahrzeug-Parameter (para_f) kann einen Traktionskoeffizienten (k_tr), einen Antriebsschlupf (s_rad), eine Traktionskraft (F_tr) und eine Lastlast (F_la) enthalten. Weiterhin betrifft die Erfindung ein System (10) mit einer Steuereinheit (18) zur Durchführung eines solchen Verfahrens.

FIG. 1

EP 4 602 911 A1

**Beschreibung**

Die Erfindung betrifft ein Verfahren und ein System zur Ermittlung eines Verdichtungszustands eines gelagerten Erntegutes, dessen Oberfläche von einem Nutzfahrzeug zur Verdichtung überfahren wird.

In der Landwirtschaft ist es bekannt, gemähtes und geschwadetes Gras aufzusammeln und zu einem Lagerort (z.B. Silo) zu transportieren. Das gelagerte Gras wird vorzugsweise in Form von Silage als Futtermittel verwendet. Dabei ist eine sorgfältige Verdichtung des gelagerten Mähgutes von Bedeutung, um Qualitätsverluste des Futters und auch unnötige Lagerkosten zu vermeiden. Um eine optimale Verdichtung zu erzielen, ist aber ein verhältnismäßig komplexer Arbeitseinsatz erforderlich.

Es ist daher Aufgabe der vorliegenden Erfindung, die Effizienz bei der Verdichtung eines gelagerten Erntegutes zu verbessern.

Diese Aufgabe wird durch ein Verfahren mit den Merkmalen des unabhängigen Patentanspruchs 1 und ein System mit den Merkmalen des unabhängigen Patentanspruchs 11 gelöst.

Weitere vorteilhafte Ausgestaltungen der Erfindung gehen aus den Unteransprüchen hervor.

Gemäß Anspruch 1 wird ein Verfahren zur Ermittlung eines Verdichtungszustands eines gelagerten Erntegutes vorgeschlagen, dessen Oberfläche von einem Nutzfahrzeug zur Verdichtung überfahren wird. Dabei wird der Verdichtungszustand in Abhängigkeit von einem oder mehreren Fahrzeug-Parametern ermittelt, welche während des Überfahrens der Oberfläche des Erntegutes wirksam sind. Als Fahrzeug-Parameter ist mindestens einer der folgenden Parameter vorgesehen:

- Ein Traktionskoeffizient des Nutzfahrzeugs oder eines oder mehrerer Fahrzeugräder.
- Ein Antriebsschlupf des Nutzfahrzeugs oder eines oder mehrerer Fahrzeugräder.
- Eine Traktionskraft des Nutzfahrzeugs oder eines oder mehrerer Fahrzeugräder.
- Eine Lastkraft am Nutzfahrzeug, d.h. insbesondere eine Radlast oder Achslast.

Abhängig von dem physikalisch-mathematischen Ansatz des Verfahrens können sich die Fahrzeug-Parameter auf einen Gesamtwert des Nutzfahrzeugs oder auf die Werte einzelner Fahrzeugräder beziehen.

Die Verdichtung des (z.B. in einem Silo) gelagerten Erntegutes ist Bestandteil des Herstellungsprozesses für Silage als Tierfutter. Als Erntegut wird insbesondere Biomasse von Agrarflächen verwendet, vorzugsweise Gras oder der Nicht-Fruchtanteil von Mais, Hirse oder anderen Getreidepflanzen.

Unter Berücksichtigung mindestens eines der vorgenannten Fahrzeug-Parameter kann ein aktueller Verdichtungszustand des gelagerten Erntegutes in Echtzeit bereits während des Überfahrens der Erntegut-Oberfläche ermittelt werden. Der technische Aufwand hierfür ist äußerst gering, da die aktuellen Werte der Fahrzeug-Parameter mittels Sensoren und/oder Berechnungsalgorithmen technisch einfach verfügbar gemacht werden können. Insbesondere können einzelne oder sämtliche Fahrzeug-Parameter über einen Systembus (z.B. ISO, CAN) des Nutzfahrzeugs bereitgestellt werden. Die Kenntnis des aktuellen Verdichtungszustands unterstützt einen effizienten Fahrbetrieb des Nutzfahrzeugs, da die Verdichtungstätigkeit bei Erreichen eines gewünschten und präzise ermittelbaren Verdichtungszustands beendet werden kann. Mit anderen Worten kann die Qualität, insbesondere Futterqualität, des gelagerten und verdichteten Erntegutes bei gleichzeitiger Effizienzsteigerung der Verdichtungstätigkeit verbessert werden. Hierdurch kann qualitativ hochwertiges Tierfutter mit niedrigeren Betriebskosten hergestellt werden. Eine Kenntnis und Überwachung des kontinuierlich ermittelbaren aktuellen Verdichtungszustands des gelagerten Erntegutes entlastet eine Arbeitsperson (z.B. Fahrzeugführer) bei der Verdichtungstätigkeit und hilft ihr, Entscheidungen für eine effiziente Verdichtungsarbeit zu treffen. Insbesondere kann die Arbeitsperson während des Fahrbetriebs des Nutzfahrzeugs in Echtzeit entscheiden, ob eine ausreichende Verdichtung erreicht worden ist oder noch nicht. Außerdem kann eine elektronische Verarbeitung des jeweils ermittelten aktuellen Verdichtungszustands eine zumindest teilweise Automatisierung der Verdichtungstätigkeit unterstützen.

Der ermittelte Verdichtungszustand kann beispielsweise durch einen absoluten Zahlenwert oder durch einen prozentualen Wert repräsentiert werden. Als prozentuale Werte können z.B. 0% für einen unverdichteten Zustand, 100% für einen vollständig verdichteten Zustand sowie Werte zwischen 0% und 100% für einen entsprechend teilweise verdichteten Zustand des Erntegutes verwendet werden.

In einer bevorzugten Ausführungsform werden der Traktionskoeffizient und/oder der Antriebsschlupf mit bereitgestellten Referenzdaten verglichen. Von dem Vergleichsergebnis kann der zu ermittelnde Verdichtungszustand abgeleitet werden. Mit anderen Worten wird der gesuchte Verdichtungszustand in Abhängigkeit von dem Vergleichsergebnis ermittelt. Hierdurch werden Fahrzeug-Parameter mit Referenzdaten in Beziehung gesetzt, so dass mit geringem technischen und algorithmischen Aufwand der aktuelle Verdichtungszustand ermittelbar ist.

Den Referenzdaten sind beispielsweise verschiedene Referenzdichten (z.B. in absoluten Zahlenwerten einer Dichte oder in prozentualen Angaben) zugeordnet, was eine Ermittlung des aktuellen Verdichtungszustands an dem gelagerten Erntegut auf Basis des vorgenannten Vergleichsergebnisses erleichtert. Die Referenzdaten können als spezifische Daten für bekannte Fahrbeläge und/oder für mindestens einen bekannten Typ des Erntegutes (z.B. Gras bzw. Silage) ausgebildet sein.

Vorzugsweise repräsentieren die Referenzdaten ein Verhältnis zwischen einem Referenz-Traktionskoeffizienten und einem Referenz-Antriebsschlupf für unterschiedliche Fahrbeläge und/oder für unterschiedliche Verdichtungszustände von mindestens einem Typ des Erntegutes, insbesondere des aktuell durch eine Verdichtungstätigkeit bearbeiteten Erntegutes.

Die Referenzdaten werden vorzugsweise durch vorherige Kalibriervorgänge (z.B. bezüglich verschiedener Fahrbeläge und/oder verschiedener Typen des gelagerten Erntegutes) generiert. Die Referenzdaten können in einer geeigneten technischen Form, beispielsweise in einer Datenbank oder Datenzentrale für einen Datenabruf, bereitgestellt werden.

Eine Abschätzung oder Ermittlung des aktuellen Verdichtungszustands des gelagerten Erntegutes wird zusätzlich erleichtert, wenn die als Referenzdaten bereitgestellten unterschiedlichen Verdichtungszustände des Erntegutes zumindest einen vollständig verdichteten Zustand (100% Verdichtung) und einen unverdichteten Zustand (0% Verdichtung) des Erntegutes repräsentieren. Dies ermöglicht einen Vergleich des aktuellen Traktionskoeffizienten und/oder des aktuellen Antriebsschlupfs mit den beiden vorgenannten Extrem-Zuständen, wodurch der aktuelle Verdichtungszustand während der Verdichtungstätigkeit quantitativ besonders genau abgeschätzt bzw. ermittelt werden kann.

Die Referenzdaten können beispielsweise als mindestens eine Kennlinie oder eine Datentabelle bereitgestellt werden. Insbesondere werden die Referenzdaten in Form eines Kennlinienfeldes bereitgestellt. Unterschiedliche Kennlinien können unterschiedliche Fahrbeläge repräsentieren. Einzelne Kennlinien können einen bestimmten Typ eines Erntegutes repräsentieren. Mehrere Kennlinien können auch unterschiedliche Verdichtungszustände desselben Typs eines Erntegutes darstellen. Die Kennlinien ermöglichen eine komfortable Unterstützung der Arbeitsperson während der Verdichtungstätigkeit, wenn beispielsweise in einer Anzeigeeinheit (z.B. Bildschirm) sowohl die aktuellen Werte des Traktionskoeffizienten und des Antriebsschlupfes als auch das Kennlinienfeld visualisiert werden. Hierdurch kann die Arbeitsperson in einer einfachen visuellen Darstellung den aktuellen Status bzw. den aktuellen Verdichtungszustand während der Verdichtungstätigkeit erkennen. Außerdem kann der Fortschritt der Verdichtungstätigkeit unmittelbar erkannt werden.

Die aktuellen Werte der Fahrzeug-Parameter während des Überfahrens der Erntegut-Oberfläche können, wie bereits erwähnt, mittels geeigneter Sensoren und/oder Berechnungsalgorithmen bestimmt werden.

Der Antriebsschlupf wird vorzugsweise in Abhängigkeit der Fahrzeuggeschwindigkeit und der Geschwindigkeit eines Fahrzeugrades oder einer Fahrzeugachse bestimmt. Hierbei kann die Fahrzeuggeschwindigkeit beispielsweise mittels eines Empfängers eines Positionserfassungssystems (z.B. GPS), eines Bodenradars oder einer erfassten Radgeschwindigkeit eines Fahrzeugrades an einer nicht-angetriebenen Fahrzeugachse erfasst werden. Die Radgeschwindigkeit eines Fahrzeugrades kann mittels eines Geschwindigkeitssensors an diesem Fahrzeugrad oder an dessen Fahrzeugachse erfasst werden.

Die Achslast kann mittels geeigneter Sensoren (z.B. Drucksensor in der Aufhängung, Sensoren an den Fahrzeugreifen oder den Fahrzeugachsen) erfasst oder berechnet werden. Insbesondere handelt es sich bei der Achslast um eine dynamische Achslast, welche sich aufgrund des Überfahrens der Erntegut-Oberfläche von einer konstanten bzw. statischen Achslast unterscheidet. Im Falle einer Berechnung der Achslast können gemessene Variablen der Nutzfahrzeugdynamik (z.B. Nicken, Wanken), eine front- und/oder heckseitige Ballastierung und bekannte statische Achslasten des Nutzfahrzeugs berücksichtigt werden.

Aktuelle Werte des Traktionskoeffizienten können beispielsweise mittels spezifischer Sensoren am Nutzfahrzeug erfasst werden. Alternativ wird der Traktionskoeffizient mit besonders geringem technischen Aufwand ermittelt, indem er in Abhängigkeit von der Achslast und/oder der Traktionskraft bestimmt wird. Insbesondere kann die Berechnungsformel

$$k\_tr = F\_tr\ /\ F\_la$$

verwendet werden, um den Traktionskoeffizienten $k\_tr$ eines Fahrzeugrades zu bestimmen. Hierbei ist $F\_tr$ die vorgenannte Traktionskraft und $F\_la$ ist die Lastkraft bzw. Radlast des betrachteten Fahrzeugrades, wobei die Radlast $F\_la$ von einer benannten Achslast ableitbar ist oder mittels eines Last-Sensors erfassbar ist.

Die Traktionskraft $F\_tr$ selbst kann entweder durch mindestens einen Sensor (z.B. an einer angetriebenen Fahrzeugachse) oder durch eine Berechnung bestimmt werden. Im Falle einer Berechnung wird die Traktionskraft vorzugsweise in Abhängigkeit von mindestens einer der folgenden Größen bestimmt:

- ein Drehmoment des Nutzfahrzeugs, z.B. des Antriebsstrangs oder eines Fahrzeugrades;
- ein Radius eines Fahrzeugrades des Nutzfahrzeugs;
- eine der Traktionskraft entgegengesetzte Reibungskraft (Rollwiderstand) des Nutzfahrzeugs, z.B. eines Fahrzeugrades.

Hierbei kann der prinzipielle physikalische Zusammenhang zugrunde gelegt werden, wonach die Traktionskraft bzw. Antriebskraft die resultierende Kraft aus dem durch ein Drehmoment des Antriebsstrangs bereitgestellten Vortrieb und dem entgegengesetzten Rollwiderstand der Fahrzeugräder ist.

Insbesondere kann zur Berechnung der Traktionskraft eines einzelnen Fahrzeugrades die Berech-

nungsformel

$$F\_tr = (M\_rad / R\_rad) - F\_ro$$

verwendet werden. Hierbei ist F_tr die Traktionskraft, M_rad das Antriebsmoment bzw. Drehmoment des Fahrzeugrades, R_rad der Radius des Fahrzeugrades bzw. Reifens und F_ro die Reibungskraft bzw. der Rollwiderstand des Fahrzeugrades auf der Fahroberfläche. Das Antriebsmoment M_rad ist von dem gesamten Antriebsmoment des Antriebsstranges ableitbar oder mittels eines Drehmoment-Sensors erfassbar.

Vorzugsweise wird zur Ermittlung des aktuellen Verdichtungszustands mit noch größerer Genauigkeit zusätzlich mindestens einer der folgenden Informationen berücksichtigt:

- Mindestens eine weitere auf das Nutzfahrzeug bezogene Information. Dies können verschiedene Fahrzeugdaten (z.B. Reifendruck, Fahrzeuggeschwindigkeit) sein. Die mindestens eine Information bzw. die Fahrzeugdaten können beispielsweise unmittelbar über entsprechende Sensorsignale oder über einen Systembus (z.B. ISO, CAN) des Nutzfahrzeugs bereitgestellt werden.
- Mindestens eine das Erntegut charakterisierende Information. Dabei kann beispielsweise zwischen gemähtem Gras und verschiedenen Getreidepflanzen unterschieden werden. Die Information kann auch einen biologischen Zustand (z.B. frisch oder vorgewelkt) des Erntegutes repräsentieren.
- Ein Feuchtegehalt des Erntegutes.

Vorteilhaft wird entlang der zu verdichtenden Oberfläche des gelagerten Erntegutes an mehreren Flächenabschnitten jeweils ein Verdichtungszustand ermittelt. Hierdurch können gezielt einzelne Oberflächenabschnitte des Erntegutes öfter oder weniger oft als andere Oberflächenabschnitte überfahren werden, um sehr effizient eine gleichmäßige Verdichtung entlang der Oberfläche des Erntegutes zu erreichen.

Vorzugsweise wird der ermittelte Verdichtungszustand an einer Anzeigeeinheit visualisiert. Der ermittelte

Verdichtungszustand kann beispielsweise unmittelbar als konkreter Zahlenwert oder als eine Markierung oder Kennlinie innerhalb des bereitgestellten Kennlinienfeldes der Referenzdaten dargestellt sein, welche spezifische Verdichtungszustände repräsentieren und ebenfalls visualisiert sein können. Im Falle der vorgenannten Abschnitts-Verdichtungszustände ist eine Visualisierung der in Oberflächenabschnitte eingeteilten Oberfläche des Erntegutes vorteilhaft, wobei unterschiedliche Abschnitts-Verdichtungszustände durch unterschiedliche Farben der Oberflächenabschnitte dargestellt sind.

Die Anzeigeeinheit (z.B. Bildschirm) kann Bestandteil einer Benutzerschnittstelle zur Eingabe, Anzeige und Ausgabe von Daten bzw. Informationen sein. Die Anzeigeeinheit kann innerhalb des Nutzfahrzeugs angeordnet sein oder außerhalb des Nutzfahrzeugs beispielsweise Bestandteil einer mobilen bzw. tragbaren Vorrichtung sein.

Die Erfindung betrifft weiter ein System zur Ermittlung eines Verdichtungszustands eines gelagerten Erntegutes, mit einem Nutzfahrzeug zum Überfahren der Oberfläche des gelagerten Erntegutes und mit einer Steuereinheit zur Durchführung des Verfahrens nach einem der Ansprüche 1 bis 10.

Das erfindungsgemäße System weist die oben beschriebenen Vorteile des erfindungsgemäßen Verfahrens auf. Dabei kann die Steuereinheit geeignete Algorithmen zur Ermittlung eines Verdichtungszustands des gelagerten und Erntegutes enthalten. Das System erlaubt es, Daten bereitzustellen, welche auf einen präzisen Soll-Verdichtungszustand des gelagerten Erntegutes ausgerichtet sind. Dies unterstützt eine qualitativ hochwertige Futtermittelherstellung (z.B. Silage) bei gleichzeitig effizientem Arbeitseinsatz des Nutzfahrzeugs. Der mit dem Verfahren kontinuierlich ermittelbare aktuelle Verdichtungszustand des Erntegutes entlastet den Fahrzeugführer und auch andere Arbeitspersonen während der Verdichtungstätigkeit. Außerdem können ermittelte Werte des Verdichtungszustandes als eine realistische Datenbasis für eine Automatisierung eines effizienten Arbeitsprozesses bei der Verdichtung des gelagerten Erntegutes dienen.

Die Steuereinheit kann im Zusammenhang mit dem ermittelten aktuellen Verdichtungszustand verschiedene weitere Daten generieren, welche während der Verdichtungstätigkeit eine Arbeitsperson mit weiteren Informationen und/oder eine Steuerung des Nutzfahrzeugs unterstützen können. Beispielsweise können mittels spezifischer Algorithmen der Steuereinheit eine noch notwendige Rest-Verdichtung oder eine vom Erntegut (z.B. vom Typ, biologischen Zustand, Feuchtegehalt) abhängige Soll-Verdichtung berechnet werden. In Abhängigkeit von dem ermittelten aktuellen Verdichtungszustand kann mittels der Steuereinheit das Nutzfahrzeug gesteuert werden, um dessen Arbeitseinsatz noch effizienter zu gestalten. So können relevante Fahrzeug-Parameter wie etwa der Reifendruck, die Fahrzeuggeschwindigkeit, die Lenkung oder die Fahrspur mittels der Steuereinheit in einer gewünschten Weise gesteuert werden.

Als Nutzfahrzeug sind insbesondere verschiedene Typen landwirtschaftlicher Nutzfahrzeuge (z.B. Traktor bzw. Schlepper, Schaufellader, Teleskoplader) geeignet. Auch autonome Fahrzeuge ohne Fahrzeugführer oder ferngesteuerte Fahrzeuge sind denkbar.

In einer bevorzugten Ausführungsform ist die Steuereinheit in dem Nutzfahrzeug integriert. Sie kann dort beispielsweise mit einem Systembus (z.B. ISO, CAN) und/oder mit anderen Funktionseinheiten des Nutzfahrzeugs verbunden sein. Der hierdurch mögliche Datenaustausch kann eine präzise und effiziente Funktionalität des Systems unterstützen.

Weiter vorzugsweise weist das System mindestens eine der folgenden Komponenten auf, welche mit der Steuereinheit über eine Datenverbindung verbunden ist:

- Eine Benutzerschnittstelle zur Eingabe und/oder Visualisierung von Daten. Hierdurch können benutzergestützte, insbesondere vom Fahrzeugführer stammende, Daten bei der Ermittlung des Verdichtungszustands technisch einfach berücksichtigt werden. Außerdem können der aktuelle Verdichtungszustand und der Fortschritt des Verdichtungsprozesses visualisiert werden, was die Arbeitsperson oder den Fahrzeugführer während der Verdichtungstätigkeit entlastet.
- Ein Positionserfassungssystem (z.B. GPS-Empfänger und ggf. weitere Bestandteile), welches vorzugsweise am landwirtschaftlichen Nutzfahrzeug angeordnet ist.
- Eine Datenzentrale mit Daten, welche während der Verfahrensdurchführung entstanden sind und/oder bereitgestellt sind. Hierdurch kann die Steuereinheit effizient auf Daten zugreifen, welche für die Ermittlung des Verdichtungszustands und für die Überwachung des Verdichtungsfortschritts relevant sind.
- Eine Datenbank mit Referenzdaten, welche unterschiedliche Referenz-Verdichtungszustände zumindest des Erntegutes der aktuellen Verdichtungstätigkeit repräsentieren. Dies unterstützt eine Versorgung der Steuereinheit mit Datenmaterial für eine präzise Ermittlung der Dichte des gelagerten Erntegutes.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1     eine blockschaltbildartige Darstellung des erfindungsgemäßen Systems,

Fig. 2     eine blockschaltbildartige Darstellung von Einzelheiten des erfindungsgemäßen Verfahrens,

Fig. 3     ein Kennlinienfeld mit einem Zusammenhang zwischen einem Traktionskoeffizienten und einem Antriebsschlupf,

Fig. 4a    eine schematische Draufsicht eines Nutzfahrzeugs und eines zu verdichtenden Erntegutes,

Fig. 4b    eine Seitenansicht des Nutzfahrzeugs und des zu verdichtenden Erntegutes gemäß Pfeilrichtung IV-B in Fig. 4a.

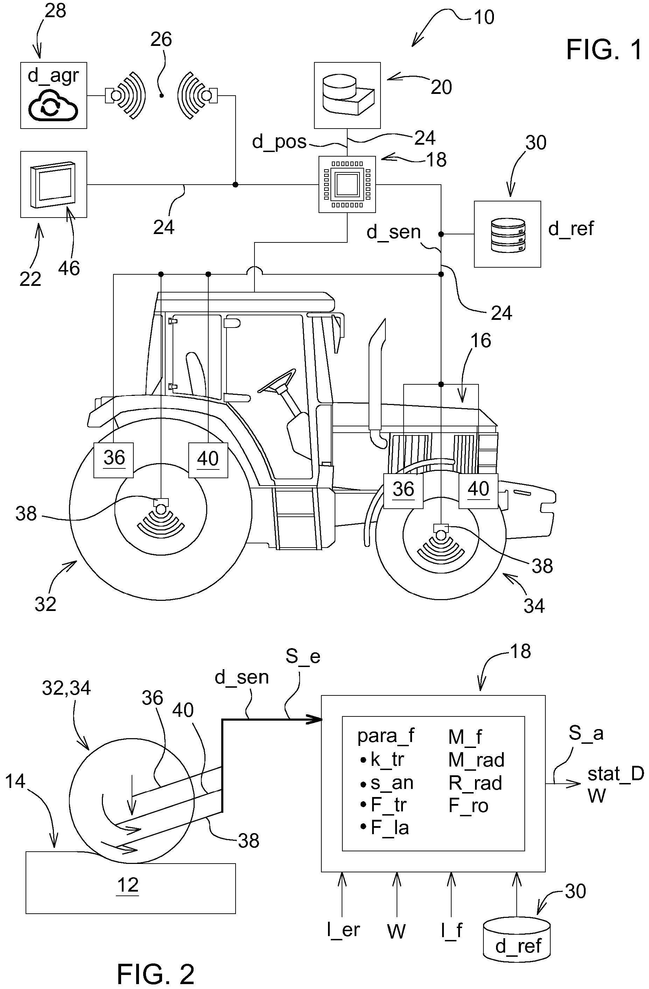

Fig. 1 zeigt ein System 10 zur Ermittlung eines Verdichtungszustands stat_D eines gelagerten Erntegutes 12, dessen Oberfläche 14 von einem landwirtschaftlichen Nutzfahrzeug 16, hier in Form eines Traktors, zur Verdichtung überfahren wird. Der ermittelte Verdichtungszustand stat_D wird von Ausgangssignalen S_a einer Steuereinheit 18 ausgegeben. Die Ausgangssignale können optional außerdem einen Feuchtegehalt W des Erntegutes 12 und weitere interessierende Daten im Zusammenhang mit der Verdichtungstätigkeit enthalten.

Die Steuereinheit 18 ist vorzugsweise in dem Nutzfahrzeug 16 integriert. Das Nutzfahrzeug 16 ist beispielsweise von einem Fahrzeugführer gesteuert oder als autonomes Fahrzeug automatisiert aktiv.

Das Nutzfahrzeug 16 und weitere Komponenten des Systems 10 sind über eine geeignete Datenverbindung mit der Steuereinheit 18 verbunden, um den Verdichtungszustand stat_D zu ermitteln und einer Arbeitsperson (z.B. dem Fahrzeugführer) insbesondere visualisiert mitzuteilen.

Ein Positionserfassungssystem 20 (z.B. GPS) und eine Benutzerschnittstelle 22 (z.B. Tastatur und Anzeigeeinheit 46 zur Eingabe und/oder Visualisierung von Daten) sind im oder am Nutzfahrzeug 16 angeordnet und jeweils über eine drahtgebundene Datenverbindung 24 mit der Steuereinheit 18 verbunden. Über eine drahtlose Datenverbindung 26 ist die Steuereinheit 18 mit einer Datenzentrale 28 verbunden. Letztere kann basierend auf einer Cloud-Technologie aufgebaut sein. Sie kann als zentraler Datenspeicher und/oder Datenverarbeitungszentrum für verschiedene agrarbezogene Aktivitäten eines Landwirts bzw. einer Farm dienen. Die Datenzentrale 28 enthält u.a. verschiedene agrarbezogene Daten d_agr. Diese Daten d_agr können zumindest teilweise beispielsweise während der Durchführung des Verfahrens zur Ermittlung des Verdichtungszustands stat_D entstanden und in der Datenzentrale 28 abgespeichert sein und/oder von der Datenzentrale 28 bereits vor der und somit auch während der Verfahrensdurchführung bereitgestellt sein. Beispielsweise sendet die Steuereinheit 18 verschiedene Ausgangssignale S_a, insbesondere den aktuellen Verdichtungszustand stat_D, an die Anzeigeeinheit 46 für eine Visualisierung des Verdichtungszustands stat_D in Echtzeit und überträgt diese Ausgangssignale S_a gleichzeitig über die Datenverbindung 26 an die Datenzentrale 28.

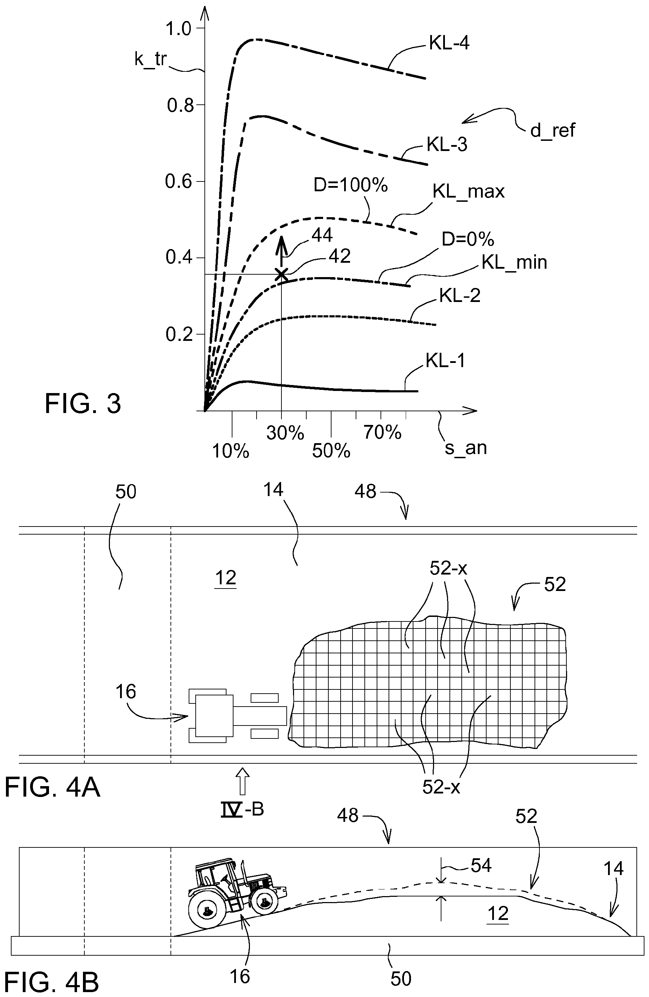

Außerdem ist eine Datenbank 30 mit Referenzdaten d_ref über eine weitere drahtgebundene Datenverbindung 24 mit der Steuereinheit 18 verbunden. Die Referenzdaten d_ref werden anhand von Fig. 3 näher erläutert.

Unter Berücksichtigung verschiedener Fahrzeug-Parameter para_f kann die Steuereinheit 18 den Verdichtungszustand stat_D ermitteln. Am Nutzfahrzeug 16 sind verschiedene Sensoren angeordnet, um die Werte verschiedener Fahrzeug-Parameter para_f während des Überfahrens der Oberfläche 14 des Erntegutes 12 direkt zu erfassen oder mittels der generierten Sensordaten d_sen in der Steuereinheit 18 zu berechnen. Hierbei werden die Sensordaten d_sen der Sensoren über eine weitere drahtgebundene Datenverbindung 24 an die Steuereinheit 18 übertragen.

Die vorgenannten Sensoren sind im Bereich der Hinterräder 32 und der Vorderräder 34 angeordnet. In dem Ausführungsbeispiel umfassen die Sensoren einen Last-Sensor 36, eine Antriebsschlupf-Sensorik 38 und einen Drehmoment-Sensor 40.

In einer weiteren Funktion kann die Steuereinheit 18 dazu verwendet werden, in Abhängigkeit von dem ermittelten aktuellen Verdichtungszustand stat_D das Nutzfahrzeug 16 zu steuern, um dessen Arbeitseinsatz zu unterstützen. So können relevante Fahrzeug-Parameter wie etwa der Reifendruck, die Fahrzeuggeschwindigkeit oder die Lenkung mittels der Steuereinheit 18 gesteuert werden.

Fig. 2 zeigt die Steuereinheit 18, welche als Eingangssignale S_e u.a. die Sensordaten d_sen empfängt. Die Sensordaten d_sen sind einem oder beiden Hinterrädern 32 und/oder einem oder beiden Vorderrädern 34 zugeordnet.

Die Steuereinheit 18 kann an mindestens einem zusätzlichen Signaleingang weitere Informationen oder Größen empfangen. Dies sind beispielsweise:

- mindestens eine weitere auf das Nutzfahrzeug 16 bezogene Information I_f, z.B. ein Reifendruck;
- eine das Erntegut 12 charakterisierende Information I_er;
- ein Feuchtegehalt W des Erntegutes 12.

Die vorgenannten Informationen oder Größen können von anderen Datenquellen abgerufen werden oder manuell über die Benutzerschnittstelle 22 eingegeben werden oder sie können durch Messungen zur Verfügung gestellt werden. Es müssen nicht zwangsläufig sämtliche der vorgenannten Informationen bzw. Größen für die Steuereinheit 18 zur Verfügung stehen. Beispielsweise handelt es sich bei dem Feuchtegehalt W und bei der das Erntegut 12 charakterisierenden Information I_er um Informationen, welche jeweils nur optional von der Steuereinheit 18 empfangen werden. Weiterhin optional können auch andere, hier nicht genannte Informationen bzw. Größen von der Steuereinheit 18 empfangen werden.

Wie bereits erwähnt, wird der Verdichtungszustand stat_D in Abhängigkeit von mehreren Fahrzeug-Parametern para_f ermittelt, insbesondere einem Traktionskoeffizient k_tr und einem Antriebsschlupf s_an. Dabei kann der Antriebsschlupf s_an über die Antriebsschlupf-Sensorik 38 ermittelt werden.

Für die Bestimmung bzw. Berechnung des Traktionskoeffizienten k_tr werden in der Steuereinheit 18 bzw. in deren Algorithmen vorzugsweise nachfolgende mathematisch-physikalische Zusammenhänge berücksichtigt. Der Traktionskoeffizient k_tr wird als Quotient

$$k\_tr = F\_tr \ / \ F\_la$$

definiert, wobei F_tr eine Traktionskraft und F_la eine Lastkraft ist. Diese beiden Kräfte können mittels geeigneter Sensoren bestimmt werden. Beispielsweise kann die Lastkraft F_la mittels des Last-Sensors 36 direkt bestimmt werden.

Alternativ können die beiden vorgenannten Kräfte berechnet werden, indem zunächst andere relevante Fahrzeuggrößen erfasst werden. Beispielhaft sei hier eine Berechnung der Traktionskraft F_tr mittels der Formel

$$F\_tr = (M\_f \ / \ R\_rad) - F\_ro$$

genannt. Dabei ist M_f ein bekanntes Drehmoment des Antriebsstranges des Nutzfahrzeugs 16, R_rad ein bekannter Reifenradius des betrachteten Fahrzeugrades 32, 34 und F_ro die der Traktionskraft F_tr entgegengesetzte Reibungskraft (Rollwiderstand) des Nutzfahrzeugs 16 bzw. des betrachteten Fahrzeugrades 32, 34. Für eine Zuordnung der Traktionskraft F_tr zu einem einzelnen Fahrzeugrad 32, 34 lässt sich das Drehmoment M_f des Antriebsstranges in der Formel durch das davon ableitbare Drehmoment M_rad des betrachteten Fahrzeugrades 32, 34 ersetzen.

Ganz allgemein können sich die Berechnungen der Fahrzeug-Parameter para_f und physikalischen Größen abhängig von dem physikalisch-mathematischen Ansatz auf einen Gesamtwert des Nutzfahrzeugs 16 oder auf die Werte einzelner Fahrzeugräder 32, 34 beziehen.

Fig. 3 zeigt beispielhaft Referenzdaten d_ref in Form eines Kennlinienfeldes, deren Kennlinien unterschiedliche Referenz-Verdichtungszustände bzw. Referenz-Verdichtungsgrade des zu verdichtenden Erntegutes 12 repräsentieren. Die untere Kennlinie KL_min repräsentiert einen vollständig unverdichteten Zustand (D = 0%), während die obere Kennlinie KL_max einen vollständig verdichteten Zustand (D = 100%) des Erntegutes 12 repräsentiert. Zwischen diesen beiden Kennlinien KL_min, KL_max können optional auch hier nicht dargestellte Kennlinien mit anderen Referenz-Verdichtungszuständen bzw. Referenz-Verdichtungsgraden für dasselbe Erntegut vorgesehen sein.

Das Kennlinienfeld zeigt einen Zusammenhang bzw. ein Verhältnis zwischen dem Traktionskoeffizienten k_tr und dem Antriebsschlupf s_an für unterschiedliche Referenz-Verdichtungszustände des zu verdichtenden Erntegutes 12. Ebenso kann das Kennlinienfeld hier nicht dargestellte Referenz-Verdichtungszustände anderer Typen des Erntegutes 12 enthalten. Optional sind zum Vergleich, insbesondere im Falle einer Visualisierung für eine Arbeitsperson, auch weitere Kennlinien in dem Kennlinienfeld enthalten. Diese weiteren Kennlinien repräsentieren vorzugsweise unterschiedliche Fahrbeläge, z.B. KL-1 (Eis), KL-2 (Schlamm), KL-3 (nasser Asphalt), KL-4 (trockener Asphalt).

Wie bereits oben erwähnt, können während der Verdichtungstätigkeit der aktuelle Traktionskoeffizient k_tr und der aktuelle Antriebsschlupf s_an sensorisch und/oder über Berechnungen bestimmt werden. Daraus ergibt sich ein aktueller Arbeitspunkt 42, welcher sich in dem Ausführungsbeispiel gemäß Fig. 3 oberhalb von der Kennlinie KL_min befindet. Die Steuereinheit 18 kann den Arbeitspunkt 42 mit den Referenz-Kennlinien KL_min, KL_max vergleichen und in Abhängigkeit von dem Vergleichsergebnis den aktuellen Verdichtungszustand stat_D ableiten. Mit zunehmender Verdichtungstätigkeit wandern die Arbeitspunkte in Richtung der Kennlinie KL_max, was den Fortschritt der Verdichtungstätigkeit anzeigt. Dieser Fortschritt ist in Fig. 3 anhand des Pfeiles 44 angedeutet.

Fig. 4a und Fig. 4b zeigen ein Silo 48, auf dessen Bodenplatte 50 das Erntegut 12 gelagert ist. In einem Oberflächenbereich 52 soll Material 54 des Erntegutes 12 verdichtet werden. Mit Hilfe von Positionsdaten d_pos des Nutzfahrzeugs 16 kann der Oberflächenbereich 52 in mehrere Oberflächenabschnitte 52-x eingeteilt werden, zu denen jeweils ein Verdichtungszustand stat_D ermittelt wird. Der positionsabhängige Verdichtungszustand stat_D kann dann mittels der Steuereinheit 18 an die Benutzerschnittstelle 22 gesendet werden. Auf diese Weise kann an der Anzeigeeinheit 46 die zu überfahrende Oberfläche 14, insbesondere der Oberflächenbereich 52, mit abschnittsweise zugeordneten aktuellen Verdichtungszuständen stat_D in Echtzeit visualisiert werden. Dabei können unterschiedliche Verdichtungszustände stat_D durch unterschiedliche Farben dargestellt werden. Beispielsweise können unverdichtete Oberflächenabschnitte 52-x durch eine rote Farbe, vollständig verdichtete Oberflächenabschnitte 52-x durch eine grüne Farbe und Oberflächenabschnitte 52-x mit anderen Verdichtungszuständen bzw. -graden durch entsprechende Farbabstufungen dargestellt werden.

**Patentansprüche**

1. Verfahren zur Ermittlung eines Verdichtungszustands (stat_D) eines gelagerten Erntegutes (12), dessen Oberfläche (14, 52) von einem Nutzfahrzeug (16) zur Verdichtung überfahren wird, wobei der Verdichtungszustand (stat_D) in Abhängigkeit von mindestens einem der folgenden während des Überfahrens wirksamen Fahrzeug-Parameter (para_f) ermittelt wird:

    - ein Traktionskoeffizient (k_tr),
    - ein Antriebsschlupf (s_an),
    - eine Traktionskraft (F_tr),
    - eine Lastkraft (F_la).

2. Verfahren nach Anspruch 1, **dadurch gekennzeichnet, dass** der Traktionskoeffizient (k_tr) und/oder der Antriebsschlupf (s_an) mit bereitgestellten Referenzdaten (d_ref) verglichen wird und der Verdichtungszustand (stat_D) in Abhängigkeit von dem Vergleichsergebnis ermittelt wird.

3. Verfahren nach Anspruch 2, **dadurch gekennzeichnet, dass** die Referenzdaten (d_ref) unterschiedliche Referenz-Verdichtungszustände (KL_min, KL_max) des Erntegutes (12) repräsentieren.

4. Verfahren nach Anspruch 3, **dadurch gekennzeichnet, dass** die unterschiedlichen Referenz-Verdichtungszustände (KL_min, KL_max) zumindest eine 100%ige Verdichtung und eine 0%ige Verdichtung des Erntegutes (12) enthalten.

5. Verfahren nach einem der Ansprüche 2 bis 4, **dadurch gekennzeichnet, dass** die Referenzdaten (d_ref) als ein Kennlinienfeld (KL_min, KL_max) bereitgestellt werden.

6. Verfahren nach einem der vorhergehenden Ansprüche,
    **dadurch gekennzeichnet, dass** der Traktionskoeffizient (k_tr) in Abhängigkeit von der Lastkraft (F_la) und/oder der Traktionskraft (F_tr) bestimmt wird.

7. Verfahren nach Anspruch 6, **dadurch gekennzeichnet, dass** die Traktionskraft (F_tr) in Abhängigkeit von mindestens einer der folgenden Größen bestimmt wird:

    - ein Drehmoment (M_f, M_rad) des Nutzfahrzeugs (16),
    - ein Radius (R_rad) eines Fahrzeugrades (32, 34) des Nutzfahrzeugs (16),
    - eine der Traktionskraft (F_tr) entgegengesetzte Reibungskraft (F_ro) des Nutzfahrzeugs (16).

8. Verfahren nach einem der vorhergehenden Ansprüche,
    **dadurch gekennzeichnet, dass** der Verdichtungszustand (stat_D) in Abhängigkeit von mindestens einer der folgenden Informationen ermittelt wird:

    - mindestens eine weitere auf das Nutzfahrzeug (16) bezogene Information (I_f),
    - eine das Erntegut (12) charakterisierende Information (I_er),
    - ein Feuchtegehalt (W) des Erntegutes (12).

9. Verfahren nach einem der vorhergehenden Ansprüche,
    **dadurch gekennzeichnet, dass** entlang der überfahrenen Oberfläche (14, 52) des gelagerten Erntegutes (12) an mehreren Oberflächenabschnitten (52-x) jeweils ein Verdichtungszustand (stat_D) ermittelt wird.

10. Verfahren nach einem der vorhergehenden Ansprüche,
**dadurch gekennzeichnet, dass** der ermittelte Verdichtungszustand (stat_D) an einer Anzeigeeinheit (46) visualisiert wird.

11. System (10) zur Ermittlung eines Verdichtungszustands (stat_D) eines gelagerten Erntegutes (12), mit einem Nutzfahrzeug (16) zur Verdichtung des gelagerten Erntegutes (12) und mit einer Steuereinheit (18) zur Durchführung des Verfahrens nach einem der Ansprüche 1 bis 10.

12. System nach Anspruch 11, **dadurch gekennzeichnet, dass** die Steuereinheit (18) in dem Nutzfahrzeug (16) enthalten ist.

13. System nach Anspruch 11 oder 12, **dadurch gekennzeichnet, dass** mindestens eine der folgenden Komponenten Bestandteil des Systems (10) ist und mit der Steuereinheit (18) über eine Datenverbindung (24, 26) verbunden ist:

   - eine Benutzerschnittstelle (22) zur Eingabe und/oder Visualisierung von Daten,
   - ein Positionserfassungssystem (20),
   - eine Datenzentrale (28) mit Daten (d_agr), welche während der Verfahrensdurchführung entstanden sind und/oder bereitgestellt sind,
   - eine Datenbank (30) mit Referenzdaten (d_ref), welche unterschiedliche Referenz-Verdichtungszustände (KL_min, KL_max) des Erntegutes (12) repräsentieren.

FIG. 1

FIG. 2

FIG. 3

FIG. 4A

FIG. 4B

Europäisches
Patentamt

European
Patent Office

Office européen
des brevets

**EUROPÄISCHER RECHERCHENBERICHT**

**Nummer der Anmeldung**

EP 24 21 8682

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/103051 A1 (CORCORAN PAUL T [US] ET AL) 14. April 2016 (2016-04-14) <br> * Abbildungen 2-4 * <br> * Absätze [0020] - [0024], [0028], [0034], [0037] - [0039] * <br> ----- | 1-13 | INV. <br> A01F25/16 <br> A01F25/18 <br><br> ADD. <br> A01B79/00 |
| X | US 2023/019762 A1 (SHONK JASON L [US]) 19. Januar 2023 (2023-01-19) <br> * Abbildungen 1, 6, 10 * <br> * Absätze [0001], [0006], [0010] * <br> ----- | 1,11 | A01D41/127 <br> E01C19/28 |
| X | EP 3 895 520 A1 (DEERE & CO [US]) 20. Oktober 2021 (2021-10-20) <br> * Abbildungen 1-3 * <br> * Absatz * <br> ----- | 1,11 | |
| X | EP 1 847 169 B1 (CLAAS SELBSTFAHR ERNTEMASCH [DE]) 16. März 2011 (2011-03-16) <br> * Abbildungen 1-3 * <br> * Absätze [0029], [0030] * <br> ----- | 1,11 | **RECHERCHIERTE SACHGEBIETE (IPC)** |
| X | EP 4 144 206 A1 (BAMFORD EXCAVATORS LTD [GB]) 8. März 2023 (2023-03-08) <br> * Abbildungen 1-5, 9 * <br> * Absätze [0001] - [0005], [0009] * <br> ----- | 1,11 | A01F <br> E01C <br> A01B <br> A01D |
| X | EP 3 895 521 B1 (DEERE & CO [US]) 15. März 2023 (2023-03-15) <br> * Abbildungen 1-3 * <br> * Absätze [0035] - [0047] * <br> ----- | 1,11 | |
| X | US 2008/267719 A1 (CORCORAN PAUL THOMAS [US]) 30. Oktober 2008 (2008-10-30) <br> * Abbildungen 1-4 * <br> * Absätze [0018] - [0020] * <br> ----- | 1,11 | |

-/--

Der vorliegende Recherchenbericht wurde für alle Patentansprüche erstellt

| Recherchenort | Abschlußdatum der Recherche | Prüfer |
|---|---|---|
| München | 2. Juli 2025 | Rogka, Christina |

Europäisches Patentamt

European Patent Office

Office européen des brevets

# EUROPÄISCHER RECHERCHENBERICHT

**Nummer der Anmeldung**

EP 24 21 8682

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/168806 A1 (CORCORAN PAUL T [US] ET AL) 16. Juni 2016 (2016-06-16)<br>* Abbildungen 1-4 *<br>* Absätze [0014] - [0017] *<br>----- | 1,11 | |
| X | US 2015/260626 A1 (FRELICH THOMAS J [US] ET AL) 17. September 2015 (2015-09-17)<br>* Abbildungen 1-4 *<br>* Absatz [0018] *<br>----- | 1,11 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 2. Juli 2025 | Rogka, Christina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 21 8682

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2025

| Im Recherchenbericht angeführtes Patentdokument | Datum der Veröffentlichung | Mitglied(er) der Patentfamilie | Datum der Veröffentlichung |
|---|---|---|---|
| US 2016103051 A1 | 14-04-2016 | DE 112015004191 T5 | 14-06-2017 |
| | | US 2016103051 A1 | 14-04-2016 |
| | | WO 2016061031 A1 | 21-04-2016 |
| US 2023019762 A1 | 19-01-2023 | KEINE | |
| EP 3895520 A1 | 20-10-2021 | DE 102020110297 A1 | 21-10-2021 |
| | | EP 3895520 A1 | 20-10-2021 |
| | | US 2021321571 A1 | 21-10-2021 |
| EP 1847169 B1 | 16-03-2011 | AR 059735 A1 | 23-04-2008 |
| | | AT E501633 T1 | 15-04-2011 |
| | | DE 102006019243 A1 | 08-11-2007 |
| | | EP 1847169 A1 | 24-10-2007 |
| | | US 2007266687 A1 | 22-11-2007 |
| EP 4144206 A1 | 08-03-2023 | CA 3172396 A1 | 03-03-2023 |
| | | EP 4144206 A1 | 08-03-2023 |
| | | GB 2610419 A | 08-03-2023 |
| | | US 2023071823 A1 | 09-03-2023 |
| EP 3895521 B1 | 15-03-2023 | KEINE | |
| US 2008267719 A1 | 30-10-2008 | KEINE | |
| US 2016168806 A1 | 16-06-2016 | CN 105696445 A | 22-06-2016 |
| | | US 2016168806 A1 | 16-06-2016 |
| US 2015260626 A1 | 17-09-2015 | CN 106068352 A | 02-11-2016 |
| | | DE 112015000916 T5 | 15-12-2016 |
| | | US 2015260626 A1 | 17-09-2015 |
| | | WO 2015142468 A1 | 24-09-2015 |

EPO FORM P0461

Für nähere Einzelheiten zu diesem Anhang : siehe Amtsblatt des Europäischen Patentamts, Nr.12/82